# FASCICULE DE BREVET EUROPEEN

(11) **EP 4 068 134 B1**
(45) Date de publication et mention de la délivrance du brevet: **19.11.2025**
(21) Numéro de dépôt: 22164862.9
(22) Date de dépôt: 28.03.2022
(51) Int. Cl.: G06F 21/62, G06F 21/57

(54) **DÉBOGAGE SÉCURISÉ**
GESICHERTE FEHLERBESEITIGUNG
SECURE DEBUGGING

(30) Priorité: 31.03.2021 FR 2103315
(43) Date de publication de la demande: 05.10.2022
(73) Titulaire: STMicroelectronics (ALPS) SAS, 38000 Grenoble (FR); STMicroelectronics (Grand Ouest) SAS, 72100 Le Mans (FR)
(72) Inventeur: ALBESA, Franck, 72250 PARIGNE L'EVEQUE (FR); ANQUET, Nicolas, 38000 GRENOBLE (FR)
(74) Mandataire: Cabinet Beaumont

(56) Documents cités:
- US-A1- 2014 137 178
- US-A1- 2015 341 341

## Description

### Domaine technique

La présente description concerne le domaine des procédés et dispositifs pour la sécurité de circuits électroniques, et en particulier un dispositif et un procédé permettant d'effectuer un débogage sécurisé d'un tel circuit.

### Technique antérieure

Les procédures de débogage d'un dispositif de traitement sont susceptibles de poser problème dans des applications où des mémoires du dispositif contiennent des données sensibles en termes de confidentialité. Il peut s'agir de clés de chiffrement, mots de passe, codes ou clés utilisés dans la vie du circuit, codes de démarrage ou protocoles propriétaires stockés dans une mémoire du dispositif par le fabriquant du dispositif ou par une entité intermédiaire entre le fabricant et un utilisateur final. Il est souhaitable que la sécurité des données sensibles ne soit pas compromise lors d'une procédure de débogage. Le document US 2015/341341 décrit un appareil et une méthode pour sécuriser une session de débogage. Le document US 2014/137178 décrit une protection de modules de plateforme de confiance contre les attaques.

### Résumé de l'invention

Il existe un besoin récurrent d'améliorer la sécurité d'accès à de telles données sensibles.

Un mode de réalisation pallie tout ou partie des inconvénients des dispositifs de traitement connus.

Un mode de réalisation prévoit un procédé de débogage d'un dispositif de traitement, le procédé comprenant :
- la génération, par un compteur monotone, d'une première valeur de comptage ;
- la transmission, par le compteur monotone, de la première valeur de comptage à un circuit de contrôle d'accès au débogage ;
- la comparaison, par le circuit de contrôle d'accès au débogage, de la première valeur de comptage avec une ou plusieurs valeurs de référence ; et
- l'autorisation ou l'interdiction d'accès pour débogage, par le circuit de contrôle d'accès au débogage, sur la base de la comparaison

Selon un mode de réalisation, la première valeur de comptage est générée lors d'une première étape d'une séquence de démarrage du dispositif de traitement, cette première étape comprenant l'incrémentation du compteur monotone à une deuxième valeur de comptage après la transmission de la première valeur de comptage.

Selon un mode de réalisation, l'autorisation ou l'interdiction comprend l'interdiction d'accès pour débogage sur la base de la première valeur de comptage, le procédé comprenant en outre :
- la transmission, par le compteur monotone, de la deuxième valeur de comptage au circuit de contrôle d'accès au débogage ;
- la comparaison, par le circuit de contrôle d'accès au débogage, de la deuxième valeur de comptage avec lesdites une ou plusieurs valeurs de référence ; et
- l'autorisation d'accès pour débogage sur la base de la deuxième valeur de comptage.

Selon un mode de réalisation, la première valeur de comptage correspond à une valeur d'initialisation du compteur monotone lors d'un premier démarrage du dispositif de traitement et la deuxième valeur de comptage correspond à une valeur d'initialisation du compteur monotone lors d'un deuxième démarrage du dispositif de traitement.

Selon un mode de réalisation :
- lors du premier démarrage, le dispositif de traitement est initialement placé dans un premier état dans lequel l'accès au débogage par le circuit d'accès au débogage est autorisé sur la base de la première valeur de comptage ; et
- lors du deuxième démarrage, le dispositif de traitement est verrouillé dans un deuxième état dans lequel l'accès au débogage par le circuit d'accès au débogage est interdit sur la base de la première valeur de comptage.

Selon un mode de réalisation, le procédé comprend en outre :
- la transmission de la première valeur de comptage, par le compteur monotone, à un circuit de contrôle d'accès d'une mémoire du dispositif de traitement ;
- la lecture, sur la base de la première valeur de comptage, de premières données stockées dans la mémoire ;
- la transmission de la deuxième valeur de comptage, par le compteur monotone, au circuit de contrôle d'accès de la mémoire du dispositif de traitement ; et
- la lecture, sur la base de la deuxième valeur de comptage, de deuxièmes données stockées dans la mémoire, le circuit de contrôle d'accès de la mémoire étant configuré de sorte que la lecture des premières données ne soit pas autorisée sur la base de la deuxième valeur de comptage.

Selon un mode de réalisation, les premier et deuxième états du dispositif de traitement sont définis par une ou plusieurs valeurs stockées dans la mémoire.

Selon un mode de réalisation, le circuit de contrôle d'accès au débogage autorise l'accès pour débogage sur la base d'une valeur de comptage supérieure ou égale à lesdites une ou plusieurs valeurs de référence et interdit l'accès pour débogage sur la base d'une valeur de comptage strictement inférieure à lesdites une ou plusieurs valeurs de référence.

Selon un mode de réalisation, le procédé comprend en outre, avant l'autorisation ou l'interdiction d'accès au débogage :
- la réception par le circuit d'accès au débogage d'une requête d'accès au débogage d'un dispositif externe ; et
- la vérification par le circuit d'accès au débogage de l'authentification du dispositif externe, dans lequel l'autorisation ou l'interdiction d'accès pour débogage, par le circuit de contrôle d'accès au débogage, est également réalisée sur la base de la vérification de l'authentification.

Un mode de réalisation prévoit un dispositif de traitement de données comprenant :
un compteur monotone configuré pour générer une première valeur de comptage ; et
un circuit de contrôle d'accès au débogage configuré pour :
   - comparer la première valeur de comptage avec une ou plusieurs valeurs de référence ; et
   - autoriser ou interdire un accès au débogage sur la base de la comparaison.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un dispositif électronique selon un mode de réalisation de la présente description ;
la figure 2 est un organigramme représentant des opérations d'un procédé d'ouverture du dispositif en mode débogage, selon un exemple de réalisation de la présente description ;
la figure 3 illustre un exemple de cycle de vie du dispositif de traitement comprenant une procédure de débogage, selon un exemple de réalisation de la présente description ;
la figure 4 représente des données et codes accessibles lors d'un démarrage sécurisé selon un mode de réalisation de la présente description ;
la figure 5 est un organigramme représentant des opérations d'un procédé de démarrage sécurisé d'un dispositif de traitement selon un exemple de réalisation de la présente description ; et
la figure 6 est un organigramme représentant des opérations d'un procédé de démarrage sécurisé d'un dispositif de traitement selon un autre exemple de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains éléments n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

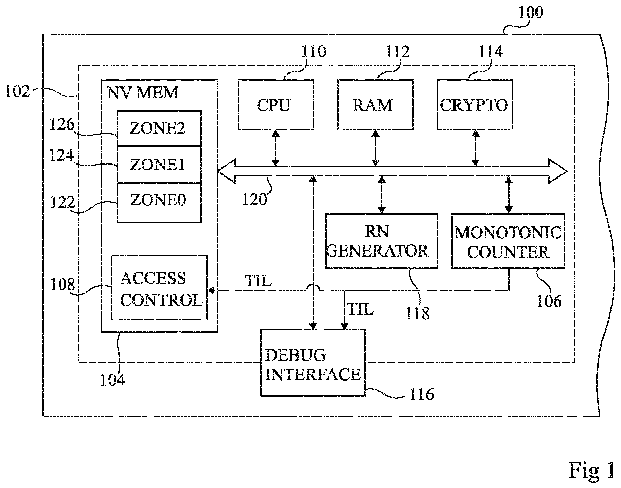

La figure 1 représente, de façon très schématique et sous forme de blocs, un dispositif électronique 100 comprenant un dispositif de traitement 102 selon un mode de réalisation de la présente description.

Le dispositif électronique 100 est par exemple une carte électronique telle qu'une carte à microcircuits, un matériel à usage informatique, un circuit à microprocesseur, etc.

Le dispositif de traitement 102 comprend par exemple une mémoire non volatile 104 (NV MEM), par exemple une mémoire flash et un compteur monotone 106 (MONOTONIC COUNTER).

Les compteurs monotones sont connus dans l'état de la technique, un exemple d'un tel compteur étant décrit dans la publication "Virtual Monotonic Counters and Count-Limited Objects using a TPM without a Trusted OS" de L.F.G. Sarmenta, M. Van Dijk, C.W. O'Donnell, J. Rhodes et S. Devadas, et en particulier dans la partie 3 de ce document. Ce document décrit des réalisations de compteurs mis en œuvre sous forme matérielle et/ou en logicielle. Le compteur monotone 106 est par exemple mis en œuvre de façon matérielle par un circuit numérique, tel qu'un circuit intégré personnalisé (ASIC, de l'anglais "Application Specific Integrated Circuit"). Le compteur monotone est configuré pour maintenir une valeur de comptage, accessible sur une sortie du compteur. Suite à une commande d'incrémentation, le compteur monotone augmente d'une ou plusieurs unités sa valeur de comptage mais, suite à chaque incrémentation, l'opération n'est pas réversible. En effet, le compteur monotone est configuré pour que sa valeur de comptage ne décroisse jamais. De plus, entre deux incrémentations, la valeur de comptage est par exemple protégée contre toutes modifications, pour qu'elle ne puisse pas être effacée ni changée. Seule la commande d'incrémentation permet le remplacement de la valeur actuelle par une nouvelle valeur supérieure à la valeur actuelle.

Le compteur monotone 106 est configuré de sorte qu'aucune commande, mis à part une remise à zéro du dispositif de traitement, ne permette de revenir à la valeur précédente une fois la commande d'incrémentation exécutée. Dans le cas où la valeur de comptage est stockée de manière volatile, chaque mise hors alimentation du dispositif de traitement engendre la perte de la valeur de comptage et à chaque remise sous tension du dispositif, le compteur monotone génère à nouveau une valeur de comptage initiale. Dans le cas où la valeur de comptage est stockée dans un élément de mémorisation non volatile, à chaque redémarrage, une valeur de comptage initiale est par exemple réécrite dans l'élément de mémorisation non volatile du compteur monotone.

Le dispositif de traitement 102 comprend en outre un processeur générique 110 (CPU). Par exemple, le processeur générique 110 est couplé par l'intermédiaire d'un bus 120 au compteur monotone 106 ainsi qu'à une mémoire RAM (mémoire à accès aléatoire) 112 et à la mémoire non volatile 104. La mémoire 112 et/ou la mémoire 104 mémorisent par exemple des instructions pour contrôler le processeur 110. Le processeur générique 110 est en outre couplé par l'intermédiaire du bus 120 à un processeur cryptographique 114 (CRYPTO) ainsi qu'à un générateur de nombres aléatoires 118 (RN GENERATOR). Le processeur cryptographique 114 reçoit, par l'intermédiaire du bus 120, des données chiffrées et retourne les données déchiffrées et/ou reçoit, par l'intermédiaire du bus 120, des données non chiffrées et retourne les données chiffrées. Dans un exemple, le générateur de nombres aléatoires 118 est un générateur de nombres pseudo-aléatoires (pseudo random-number generator), par exemple un générateur congruentiel linéaire, utilisant des suites récursives arithmétiques ayant un comportement désordonné et ayant une période suffisamment longue pour paraître aléatoire. La qualité d'un tel générateur dépend entièrement des paramètres arithmétiques utilisés. Dans un autre exemple, le générateur 118 est un générateur de nombres purement aléatoires (true random number generator) utilisant une source physique aléatoire basée, par exemple, sur des propriétés intrinsèques d'un matériau sur lequel il est implanté.

Le dispositif de traitement 102 comprend en outre un circuit d'accès au débogage (DEBUG INTERFACE) 116 relié au bus 120. Par exemple, le circuit 116 fait partie de, ou est relié à, un port de débogage JTAG (de l'anglais Joint Test Action Group) ou un port de débogage SW-DP (de l'anglais Serial Wire Debug Port) ou tout autre type de circuit d'accès permettant un accès pour débogage du dispositif 102. Le circuit 116 permet à un utilisateur de connecter une interface compatible (non représentée) au dispositif 102 afin de demander l'exécution d'une procédure de débogage du système, par exemple dans le cas de dysfonctionnements. Selon les modes de réalisation décrits ici, le circuit 116 est configuré en outre pour limiter l'accès à la procédure de débogage sur la base de la valeur de comptage générée par le compteur monotone 106. Le compteur monotone 106 est par exemple commandé pour incrémenter sa valeur de comptage pendant le fonctionnement du dispositif 102, par exemple pendant la phase de démarrage du dispositif 102. Ainsi, il est possible de limiter des périodes de temps lors desquelles les fonctionnements de débogage sont accessibles.

La mémoire non volatile 104 comprend, par exemple, un circuit contrôle d'accès 108 (ACCESS CONTROL) relié à la sortie du compteur monotone 106. La mémoire 104 stocke, par exemple, plusieurs ensembles de données, par exemple des codes de démarrage et/ou des clefs de chiffrement, qui sont associés à plusieurs niveaux d'isolement TIL (de l'anglais "temporal isolation level"). Dans l'exemple de la figure 1, la mémoire non volatile 104 comprend une première zone 122 dans laquelle est stocké un premier ensemble de données (ZONE0). La mémoire 104 comprend en outre une deuxième zone 124, dans laquelle est stocké un deuxième ensemble de données (ZONE1), ainsi qu'une troisième zone 126 dans laquelle est stocké un troisième ensemble de données (ZONE2). Les premier, deuxième et troisième ensembles de données sont par exemple associés à trois niveaux d'isolement TIL correspondants. Bien que le cas de trois ensembles de données soit illustré dans la figure 1, dans d'autres modes de réalisation, la mémoire non volatile 104 peut ne stocker que deux ensembles, ou plus de trois ensembles de données, dans des zones correspondantes.

Le niveau d'isolement TIL dépend de la valeur de comptage générée par le compteur monotone 106. Dans l'exemple de la figure 1, la valeur de niveau TIL est égale à la valeur de comptage du compteur monotone 106, bien qu'il serait possible de modifier la valeur de comptage afin de générer la valeur de niveau TIL.

Le mécanisme de contrôle d'accès implémenté par le circuit 108 peut être mis en œuvre de plusieurs manières. Dans un premier exemple, quand le circuit 108 reçoit une demande de lecture, par le dispositif 102 lui-même ou par l'intermédiaire du circuit d'accès au débogage 116, associée à une ou plusieurs adresses dans la mémoire 104, il est configuré pour comparer cette/ces adresse(s) aux plages d'adresses associées aux zones 122, 124 et 126 de la mémoire 104. S'il s'agit d'une adresse dans une zone associée à une valeur de niveau TIL inférieure à la valeur courante, le circuit de contrôle d'accès 108 est par exemple configuré pour bloquer l'opération de lecture. Dans un deuxième exemple, le circuit 108 est configuré pour désactiver un circuit de lecture de toute zone 122, 124 et 126 de la mémoire 104 associée à une valeur de niveau TIL inférieure à la valeur courante. Par exemple, une ou plusieurs portes logiques, telles que des portes OU ou des portes ET, sont couplées dans le chemin de sortie de chaque zone 122, 124 et 126 de la mémoire 104 et reçoivent également un signal d'activation généré sur la base de la valeur de TIL permettant de désactiver sélectivement chaque chemin de sortie.

Le fait que la valeur de niveau TIL ne puisse pas être décrémentée lors de la période de fonctionnement du dispositif 100 permet la protection des ensembles de données, le circuit de contrôle d'accès 108 empêchant leur lecture sur la base d'une valeur de niveau TIL supérieure à la valeur leur étant associée.

Dans certains modes de réalisation, un ou plusieurs des ensembles de données et les niveaux d'isolement associés sont réservés à des entités distinctes dans la chaîne allant du fabriquant jusqu'à l'utilisateur final. Par exemple, une entité intermédiaire entre le fabriquant du dispositif de traitement et l'utilisateur final du dispositif électronique 100 peut être amené à stocker des données, par exemple des codes de démarrage, qui sont propres à l'utilisation du dispositif 100. Dans ce cas, un ou plusieurs ensembles de données les plus « bas », par exemple associés au niveau d'isolement 0, sont par exemple réservés au fabricant du dispositif de traitement 102, et d'autres ensembles sont réservés à l'entité intermédiaire.

Cependant, lorsque le dispositif 102 présente un ou plusieurs disfonctionnements, le fabriquant, l'entité intermédiaire, ou une autre entité, extérieure au fabriquant ainsi qu'à l'entité intermédiaire, peut effectuer une procédure de débogage. Il est alors souhaitable que les ensembles de données étant par exemple associés aux valeurs de niveau TIL réservées au fabriquant et/ou à l'entité intermédiaire ne soient pas accessibles lors de cette procédure.

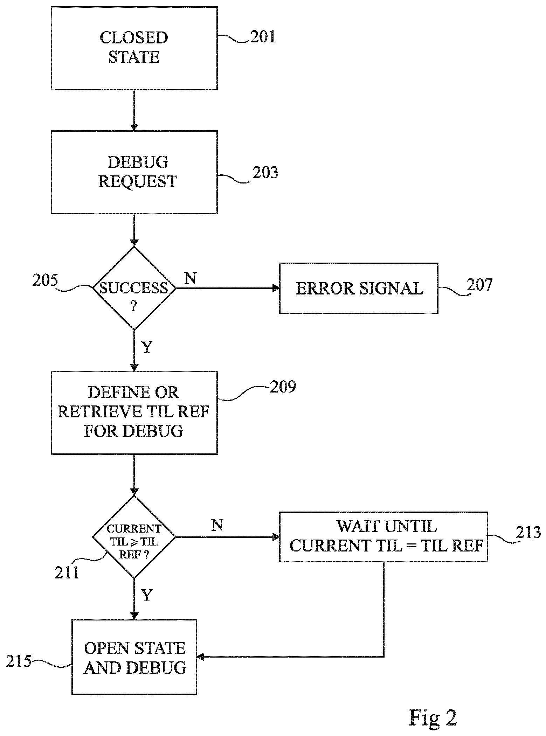

La figure 2 est un organigramme représentant des opérations d'un procédé d'ouverture du dispositif de traitement 102 en mode débogage, selon un exemple de réalisation de la présente description. Ce procédé est implémenté, par exemple, par le circuit d'accès au débogage 116 et le circuit de contrôle d'accès 108 du dispositif 102.

Dans une étape 201 (CLOSED STATE), le dispositif de traitement vient d'être démarré, et se place automatiquement dans un état dit fermé (ou sécurisé). Dans l'état fermé, l'accès aux procédures de débogage n'est pas permis. Le contenu des mémoires du dispositif 102, et en particulier le contenu des zones 122, 124 et 126 de la mémoire non volatile 104, est donc rendu inaccessible de l'extérieur par le circuit d'accès au débogage 116. Autrement dit, l'exécution de tests du dispositif de traitement 102 ainsi que d'un protocole de débogage sont inaccessibles lorsque le dispositif de traitement 102 est dans l'état fermé et ce quelle que soit la valeur de niveau TIL courante.

Dans une étape 203 (DEBUG REQUEST), postérieure à l'étape 201, un dispositif externe de débogage est connecté au circuit d'accès au débogage 116 afin d'activer un mode de débogage du dispositif 102. Par exemple, le dispositif externe envoie une requête d'accès au mode de débogage au circuit d'accès au débogage 116. L'étape 203 comprend également, par exemple, une procédure d'authentification initiée par le dispositif de traitement 102. Par exemple, cette procédure d'authentification est basée sur la vérification, par le circuit d'accès au débogage 116, d'une signature numérique générée par le dispositif externe, et fournie avec, ou séparément de, la requête d'accès au mode de débogage.

Dans une étape 205 (SUCCESS ?), postérieure à l'étape 203, la procédure d'authentification se termine. Soit la procédure d'authentification réussit (branche Y), soit elle échoue (branche N). Dans le cas où la procédure échoue, le procédé se termine sur une étape 207 (ERROR SIGNAL) dans laquelle le dispositif de traitement alerte l'initiateur de la procédure d'authentification que celle-ci a échoué. Par exemple cette alerte est un message d'erreur, ou un bip sonore.

Dans le cas où la procédure d'authentification est réussie, le procédé continue, dans certains cas, sur une étape 209 (DEFINE OR RETRIEVE TIL REF FOR DEBUG) dans laquelle une ou plusieurs valeurs de niveau TIL de référence sont par exemple définies ou récupérées. Les valeurs de référence indiquent les valeurs de niveau de TIL qui sont compatibles avec l'accès au mode de débogage. Par exemple, une ou plusieurs valeurs de référence peuvent définir une ou plusieurs valeurs de niveau de TIL pour lesquelles l'accès au mode de débogage est interdit, ou bien une ou plusieurs valeurs de niveau de TIL pour lesquelles l'accès au mode de débogage est permis. Dans certains cas, la valeur de niveau de TIL de référence est un seuil à partir duquel, ou au-dessus duquel, l'accès au mode de débogage est permis. Dans la suite, le cas dans lequel une seule valeur de niveau de TIL de référence indiquant le seuil de la valeur de niveau de TIL à partir duquel l'accès au mode de débogage est permis est considéré.

Dans certains cas, la ou les valeurs de niveau de TIL de référence sont invariables et sont stockées dans une mémoire du dispositif 102. Dans un autre exemple, la ou les valeurs de niveau de TIL de référence peuvent être définies par une requête du dispositif externe.

Dans une étape 211 (CURRENT TIL ≥ TIL REF ?), postérieure à l'étape 209, la valeur de niveau TIL courante, correspondant par exemple à la valeur de comptage du compteur monotone, est comparée à une ou plusieurs valeurs de niveau TIL de référence, qui ont par exemple été définies ou récupérées dans l'étape 209. Si la valeur de niveau TIL courante n'est pas supérieure ou égale à la valeur de niveau TIL de référence (branche N), autrement dit, si la valeur de niveau TIL courante est strictement inférieure à la valeur de niveau TIL de référence, le procédé est en attente pendant une étape 213 (WAIT UNTIL CURRENT TIL = TIL REF) en attendant que le compteur monotone 106 soit incrémenté et que la valeur de niveau TIL courante soit égale à la valeur de niveau TIL de référence. Par exemple, dans le cadre d'un démarrage du dispositif de traitement 102 dans lequel les zones 122, 124 et 126 contiennent des codes de démarrage et dans lequel le compteur monotone est incrémenté après l'exécution des codes de chaque zone, l'étape 213 consiste à attendre que, par exemple, au moins certaines étapes du processus de démarrage se terminent.

Suite à l'étape 213, ou si dans l'étape 211 la valeur de niveau TIL courante est au moins égale à la valeur de niveau TIL de référence (branche Y), le procédé se termine dans une étape 215 (OPEN STATE AND DEBUG) dans lequel le circuit passe de l'état fermé à un état ouvert, permettant l'exécution de tests et de protocoles de débogage du dispositif de traitement 102 et la procédure de débogage s'exécute.

A titre d'exemple en relation avec la figure 1, le dispositif de traitement démarre et par exemple la valeur de niveau TIL initiale vaut 0. Une requête d'entrée dans le mode de débogage est transmise au circuit d'accès au débogage 116 et l'authentification de l'étape 205 est réussie. Par exemple, suite à l'étape 209, la valeur de niveau TIL de référence est identifiée comme étant égale à 3. Par exemple, les zones 122, 124 et 126 sont respectivement associées aux valeurs de niveau TIL 0, 1 et 2 et contiennent des codes de démarrage. La procédure de débogage est alors en attente dans l'étape 213 et les codes contenus dans la zone 122 sont exécutés, entraînant l'incrémentation du compteur monotone 106, et la valeur de niveau TIL est donc égale à 1. La procédure de débogage est toujours en attente. Les codes contenus dans la zone 124 sont exécutés, entraînant l'incrémentation du compteur monotone 106, et la valeur de niveau TIL est donc égale à 2. La procédure de débogage est toujours en attente. Les codes contenus dans la zone 126 sont exécutés, entraînant l'incrémentation du compteur monotone 106, et la valeur de niveau de TIL est donc égale à 3. La valeur de niveau TIL courante étant égale à la valeur de niveau TIL de référence, la procédure de débogage peut démarrer.

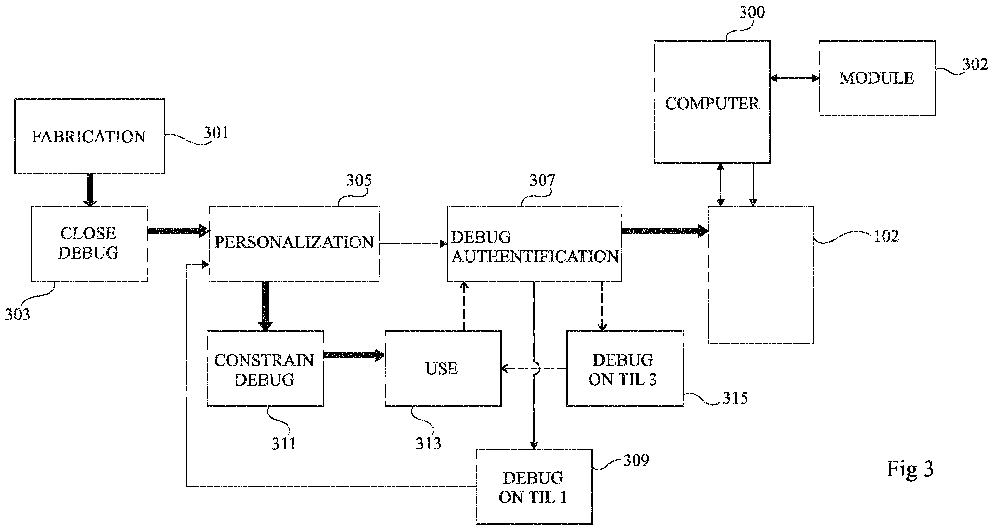

La figure 3 illustre un exemple de vie du dispositif de traitement permettant l'implémentation d'une procédure de débogage. Les blocs référencés avec des numéros impairs correspondent à des étapes de la vie du dispositif de traitement 102 selon un mode de réalisation de la présente description, et les blocs référencés avec des numéros pairs correspondent à des éléments matériels utilisés pour initier et réaliser la procédure de débogage.

La vie du dispositif de traitement 102 débute dans une étape 301 (FABRICATION) de fabrication. Durant l'étape 301, des données propres au fabriquant, comme par exemple des codes de démarrage et des clefs de chiffrement, sont stockées dans la mémoire non volatile 104 du dispositif 102. Ces données sont confidentielles et le fabriquant du dispositif 102 ne souhaite pas que ces données soient accessibles par une tierce personne. Dans l'exemple de la figure 3, les données confidentielles stockées par le fabriquant sont associées à la valeur de niveau TIL 0. A titre d'exemple en relation avec la figure 1, ces données sont stockées dans la zone 122 de la mémoire non volatile 104.

La valeur de niveau TIL 0 correspond par exemple à la valeur de comptage initiale générée par le compteur monotone 106 lors du premier démarrage du dispositif 102.

Suite au stockage des données confidentielles et dans une étape 303 (CLOSE DEBUG), l'accès au débogage est fermé. Cela implique que l'accès au débogage est précédé par une procédure d'authentification pour débogage.

Le dispositif 102 est par exemple personnalisé dans une étape 305 (PERSONALIZATION). Par exemple, à ce stade de la vie du dispositif 102, celui-ci est dans les mains d'une entité intermédiaire. L'entité intermédiaire est par exemple un revendeur qui va personnaliser le dispositif 102 afin de l'adapter au fonctionnement du dispositif électronique 100. L'entité intermédiaire va par exemple stocker d'autres données, par exemple d'autres codes de démarrage et d'autres clefs de chiffrement, dans une autre partie de la mémoire 104. Dans un exemple en relation avec la figure 1, ces autres données sont stockées dans les zones 124 et 126. Par exemple, une partie des données stockées par l'entité intermédiaire est associée à la valeur de niveau TIL 1 et est stockée dans la zone 124 et une autre partie des données est associée à la valeur de niveau TIL 2 et est stockée dans la zone 126.

Dans un exemple, suite à l'étape 305, l'entité intermédiaire initie une procédure de débogage dans une étape 307 (DEBUG AUTHENTIFICATION). Cette procédure est par exemple initiée afin de vérifier le bon fonctionnement du dispositif 102 suite à la personnalisation.

Par exemple, la valeur de niveau TIL 0 ayant été fermée dans l'étape 305, la valeur de référence pour cette procédure est égale à 1. Le déroulement de la procédure de débogage lorsque la valeur de référence est égale à 1 est représenté par la suite de flèches fines et continues. Une fois que l'authentification pour débogage est réussie et que le dispositif 102 est ouvert pour débogage, le dispositif 102 est débogué dans une étape 309 (DEBUG ON TIL 1). Lors de cette étape, les données associées à la valeur de niveau TIL 0 sont inaccessibles contrairement aux données stockées par exemple par l'entité intermédiaire et associées aux valeurs de niveau TIL 1 et 2. Une fois débogué, la personnalisation du dispositif 102 dans l'étape 305 peut continuer.

Suite à la personnalisation du dispositif 102 et dans une étape 311 (CONSTRAIN DEBUG), la valeur de niveau TIL de référence est programmée pour permettre l'accès au mode de débogage uniquement pour des valeurs de niveau TIL supérieures à une valeur de référence, par exemple la valeur 2 ou 3. Les zones mémoire associées aux valeurs de niveau TIL inférieures à la valeur de référence sont donc verrouillées, en particulier pour ce qui concerne des procédures de débogage. En particulier, suite à l'étape 311, le débogage de type « root of trust », associé par exemple au niveau de TIL 0 et/ou 1, ne sont plus permis.

Suite à l'étape 311, le dispositif 102 est par exemple acquis et utilisé dans une étape 313 (USE) par son utilisateur final.

Lors de son usage par l'utilisateur final, le dispositif 102 peut être amené à subir à nouveau une procédure de débogage, initiée par exemple par le fabricant ou par une autre entité. Dans ce cas, la procédure de débogage dans l'étape 307 (DEBUG AUTHENTIFICATION) est initiée. Le déroulement de cette procédure de débogage est représenté par la suite de flèches en pointillé.

Une fois que l'authentification pour débogage est réussie et que le dispositif 102 est ouvert pour débogage, le dispositif 102 est débogué dans une étape 315 (DEBUG ON TIL 3). Par exemple, le débogage étant effectué après l'étape 311, lors de laquelle l'accès au débogage pour une valeur de TIL égale ou inférieure à 1 a été verrouillé, la valeur de niveau de TIL de référence identifiée par le dispositif est supérieure à 1. Dans l'exemple de la figure 3, elle est égale à 3.

Dans l'étape 307 d'authentification pour débogage, un dispositif informatique 300 (COMPUTER) est par exemple relié au dispositif 102 par l'intermédiaire du circuit d'accès pour débogage 116. La procédure d'authentification pour débogage est par exemple mise en œuvre par un protocole de signature numérique basée sur de la cryptographie asymétrique. Par exemple, l'initiateur de la procédure de débogage possède une carte 302 (MODULE) contenant une clef privée et reliée au dispositif informatique 300. Par exemple, le générateur de nombres aléatoires 118 du dispositif 102 de la figure 1 transmet en outre une valeur aléatoire au dispositif informatique 300, par l'intermédiaire du circuit d'accès au débogage 116. La clef privée est utilisée pour signer la valeur aléatoire et la valeur aléatoire signée est transmise au processeur cryptographique 114 du dispositif 102. Le dispositif 102 contient par exemple une clef publique. La clef publique est par exemple stockée dans la mémoire non volatile 104 en dehors des zones 122, 124 et 126, ou dans une autre mémoire non volatile non illustrée. L'authenticité de la signature de la valeur aléatoire est alors vérifiée sur la base de la clef publique. Dans un exemple, la clef privée utilisée pour permettre l'accès au mode de débogage pour la valeur de niveau de TIL dans l'étape 309 n'est pas la même que la clef privée utilisée pour permettre l'accès au mode de débogage pour la valeur de niveau de TIL dans l'étape 315.

Ce protocole d'authentification est un exemple présenté à titre non limitatif. D'autres protocoles d'authentification peuvent être mis en œuvre.

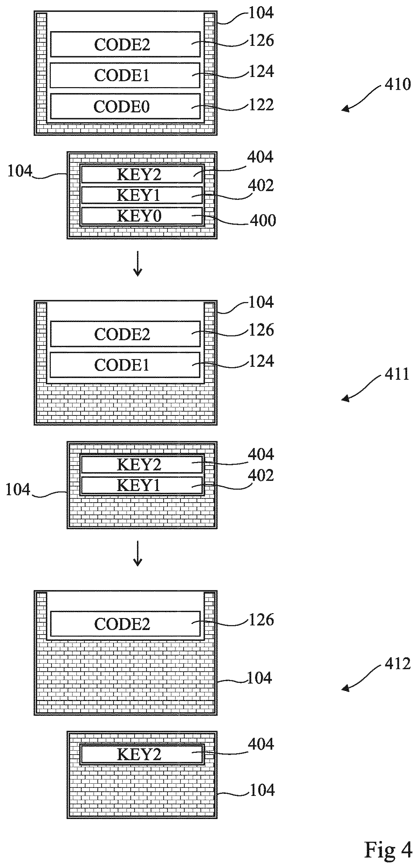

Les figures 4 à 6 illustrent un mode de réalisation de la présente description dans lequel les données chiffrées sont des codes de démarrage et/ou des clefs de chiffrement associées à ces codes, et la valeur de niveau TIL est incrémentée à la fin de chaque étape de la séquence de démarrage. Chaque valeur de niveau TIL correspond en outre à un ou plusieurs codes de démarrage associés à chaque étape de démarrage, ces codes étant rendus inaccessibles lorsque la valeur de niveau TIL courante est supérieure à la valeur de niveau TIL leur étant associée.

Dans l'exemple de la figure 4, des zones mémoire 400, 402 et 404 stockent des données sensibles associées respectivement à des codes de démarrage 122, 124 et 126 stockés dans la mémoire non volatile 104. Les zones 400, 402 et 404 sont par exemple des zones distinctes des zones 122, 124 et 126, mais restent associées à un niveau d'isolement correspondant à celui des codes de démarrage auxquels les données sont liées. Ces données sensibles incluent par exemple une ou plusieurs clefs de chiffrement stockées dans chaque zone 400, 402 et 404 et chacune de ces zones est contenue dans la mémoire non volatile 104. Selon un autre mode de réalisation, chaque zone 400, 402 et 404 est une sous-zone de la zone correspondante 122, 124 et 126.

Lors d'une première étape 410 de démarrage du dispositif de traitement illustrée en haut de la figure 4, la valeur de comptage courante est par exemple égale à 0. Dans l'exemple de la figure 4, un niveau d'isolement 0 est associé à un premier code (CODE0) ainsi qu'à des premières données sensibles (KEY0). Le circuit de contrôle d'accès à la mémoire 108 est configuré, par exemple, pour que ce premier code et ces premières données soient exclusivement accessibles lorsque la valeur de comptage courante est égale à 0. Cependant, lors de l'étape 410, le circuit de contrôle d'accès 108 autorise par exemple l'accès à toutes les zones mémoire 122, 124 et 126, ainsi qu'à toutes les zones 400, 402 et 404. En effet, dans certains cas, afin par exemple d'anticiper des étapes suivantes dans le procédé de démarrage, un ou plusieurs autres codes de démarrage (CODE1, CODE2) sont accessibles à la lecture pendant l'étape 410.

Par exemple, une fois que le premier code CODE0 est exécuté, le processeur générique 110 commande une première incrémentation de la valeur de comptage courante par le compteur monotone 106. Par exemple, le premier code comprend une commande demandant l'incrémentation du compteur. Cette commande est par exemple transmise vers un registre de commande (non illustré) du compteur monotone 106.

Après cette première incrémentation, la valeur de comptage courante du compteur monotone 106 est par exemple égale à 1, correspondant à une deuxième étape 411 du démarrage. Le circuit de contrôle d'accès 108 reçoit la nouvelle valeur de comptage courante, et est configuré pour empêcher, sur la base de cette valeur de comptage supérieure à 0, tout accès au premier code ainsi qu'aux premières données qui sont associées au niveau d'isolation 0. Autrement dit, les zones mémoires 122 et 400 sont verrouillées sur la base de toute valeur de comptage strictement supérieure à 0.

Le niveau d'isolation 1 est associé à un deuxième code (CODE1) contenu dans la zone 124 ainsi qu'à des deuxièmes données (KEY1) contenues dans la zone 402. Selon un mode de réalisation, un troisième code (CODE2), par exemple associé au niveau d'isolation 2 et contenu dans la zone 126, est accessible pour lecture sur la base de la valeur de comptage courante égale à 1.

Par exemple, une fois que le deuxième code CODE1 est exécuté, le processeur générique 110 commande une deuxième incrémentation de la valeur de comptage courante par le compteur monotone 106. Par exemple, après cette deuxième incrémentation, la valeur de comptage courante du compteur monotone 106 est égale à 2, correspondant à une troisième étape 412 du démarrage. Le niveau d'isolation 2 est associé au troisième code CODE2 ainsi qu'à des troisièmes données (KEY2). Le circuit de contrôle d'accès 108 reçoit la nouvelle valeur de comptage, et est configuré pour empêcher, sur la base de cette valeur de comptage supérieure à 1, tout accès au premier et au deuxième codes ainsi qu'aux premières et aux deuxièmes données qui sont associées aux niveaux d'isolation inférieurs ou égaux à 1.

Selon un mode de réalisation, lorsque le dernier code de démarrage est exécuté, par exemple le troisième code de démarrage, le processeur générique 110 commande une troisième incrémentation de la valeur de comptage courante par le compteur monotone. Le circuit de contrôle d'accès 108 verrouille alors tout accès aux premier, deuxième et troisième codes de démarrage ainsi qu'aux premières, deuxièmes et troisièmes données.

Selon autre mode de réalisation, lorsque le dernier code de démarrage est exécuté, par exemple le troisième code de démarrage, la valeur de comptage courante n'est pas incrémentée par le compteur monotone 106 et l'accès au troisième code de démarrage ainsi qu'aux troisièmes données reste autorisé par le circuit de contrôle d'accès 108.

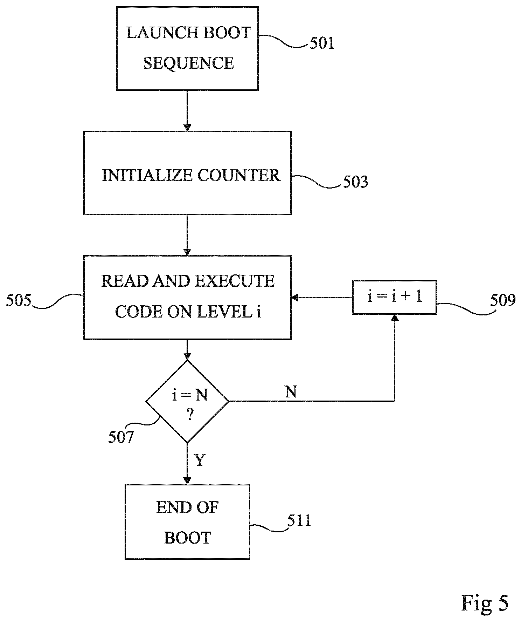

La figure 5 est un organigramme représentant des opérations d'un procédé de démarrage sécurisé d'un dispositif de traitement selon un exemple de réalisation de la présente description. Ce procédé est mis en œuvre par exemple par le processeur générique 110, le compteur monotone 106 et le circuit de contrôle d'accès 108, du dispositif de traitement de la figure 1.

Dans une étape 501 (LAUNCH BOOT SEQUENCE) le dispositif de traitement 102 démarre. Dans un exemple il s'agit du premier démarrage du dispositif 102 après sa production. Dans un autre exemple il s'agit d'un démarrage effectué par une entité intermédiaire entre le fabriquant du dispositif 102 et son utilisateur final. Encore dans un autre exemple, il s'agit d'un démarrage dit de fonctionnement du dispositif électronique 100 effectué par l'utilisateur final.

Dans une étape 503 (INITIALIZE COUNTER), postérieure à l'étape 501, le compteur monotone est initialisé à une valeur initiale, étant un entier naturel. Dans l'exemple dans lequel la valeur de comptage est stockée de manière volatile, chaque mise sous tension du dispositif de traitement engendre l'initialisation de la valeur de comptage, par exemple à 0 ou à 1. Dans un autre exemple dans lequel la valeur de comptage est stockée sur des éléments de mémorisation non volatile, chaque mise sous tension du dispositif de traitement engendre le remplacement de la valeur de comptage courante par la valeur de comptage initiale, par exemple égale à 0 ou à 1.

Dans certains modes de réalisation, la valeur de comptage initiale générée suite à une mise sous tension peut varier selon l'état, ou contexte, du dispositif de traitement 102. Par exemple, une ou plusieurs valeurs de comptage correspondent à un ou plusieurs niveaux d'isolation réservés à une phase de paramétrisation initiale du dispositif 102, comprenant par exemple l'installation de micrologiciels. Les données et/ou codes associés à ces niveaux d'isolement sont par exemple utilisés pour cette paramétrisation initiale.

Par exemple, suite à la fabrication, le dispositif de traitement 102 a le contexte "vierge" et la valeur de comptage initiale est égale à une valeur réservée à la paramétrisation, telle que 0. Une fois la paramétrisation achevée, le contexte du dispositif devient par exemple "paramétrisation achevée". Avec ce nouveau contexte, la mise sous tension du dispositif 102, effectuée par exemple par une entité intermédiaire entre le fabriquant et l'utilisateur final et/ou par l'utilisateur final, déclenchera alors une valeur de comptage supérieure à la valeur de comptage réservée, et par exemple égale à 1. Le ou les codes de démarrage, ainsi que les données sensibles, associées au niveau d'isolement correspondant à la valeur de comptage réservée seront, par conséquent, inaccessibles.

Par exemple, le contexte du dispositif est détecté par la présence d'une tension sur une broche de démarrage du dispositif, cette tension étant appliquée par exemple par l'ajout d'un cavalier (en anglais "jumper") entre la broche de démarrage et une autre broche à une tension d'alimentation. A titre complémentaire ou alternatif, le contexte du dispositif est détecté par la valeur d'un ou plusieurs bits stockés de façon non volatile, et de manière protégée, dans la mémoire 104, ou dans une autre mémoire.

Dans un exemple, le processeur générique 110 est agencé pour détecter le contexte du dispositif 102 lors de la mise sous tension du dispositif 102, et pour configurer en conséquence la valeur de comptage initiale du compteur monotone 106. Dans un autre exemple, le compteur monotone 106 est agencé pour détecter lui-même le contexte du dispositif 102 et pour configurer lui-même sa valeur de comptage initiale, lors de la mise sous tension du dispositif 102.

Dans une étape 505 (READ AND EXECUTE CODE ON LEVEL i), postérieure à l'étape 503, les données et les codes de démarrage associés au niveau d'isolement i sont lus par le processeur générique 110 et les codes de démarrage associés au niveau d'isolement i sont exécutés. Une fois les codes du niveau i exécutés, le processeur générique 110 compare, dans une étape 507 (i=N ?) la valeur de comptage i à la valeur N, N étant la valeur de comptage associée à la dernière étape dans la séquence de démarrage, autrement dit les codes de démarrage du niveau d'isolement N sont les derniers à être exécutés selon le mode de réalisation de la présente description. Par exemple, dans l'exemple de la figure 4, N est égale à 2. Si i n'est pas égal à N (branche N), le procédé continue dans une étape 509 (i=i+1) dans laquelle le processeur générique déclenche l'incrémentation de la valeur de comptage. Par exemple, la valeur de comptage passe de i à i+1. Il est également possible que l'incrémentation augmente la valeur i de plusieurs unités. Le procédé reprend alors à l'étape 505.

Dans le cas où, suite à l'étape de comparaison 507, la valeur de comptage est égale à N (branche Y), le procédé se termine sur une étape 511 (END OF BOOT) dans laquelle le démarrage du dispositif de traitement se termine. Selon un mode de réalisation, la valeur de comptage courante reste égale à N suite à l'étape 511. Selon un autre mode de réalisation, la valeur de comptage est incrémentée lors de l'étape 511, et la valeur de comptage courante devient égale à N+1. Dans ce deuxième cas, le circuit de contrôle d'accès 108 est configuré pour empêcher tout accès à tous les codes de démarrage sur la base de cette valeur de comptage.

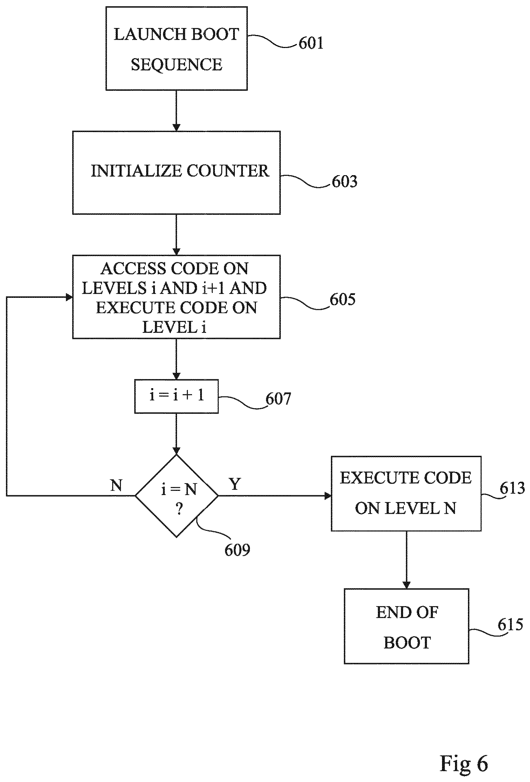

La figure 6 est un organigramme représentant des opérations d'un procédé de démarrage sécurisé d'un dispositif de traitement selon un autre exemple de réalisation de la présente description. Ce procédé est mis en œuvre par exemple par le processeur générique 110, le compteur monotone 106 et le circuit de contrôle d'accès 108, du dispositif de traitement de la figure 1.

Les étapes 601 et 603 sont similaires aux étapes 501 et 503 de la figure 5, et ne vont pas être décrites à nouveau en détail.

Dans une étape 605 (ACCESS CODE ON LEVELS i AND i+1 EXECUTE CODE ON LEVEL i), postérieure à l'étape 603, les données et les codes de démarrage associés aux niveaux d'isolement i+1 sont accessibles par le processeur générique 110 et le ou les codes de démarrage associés au niveau d'isolement i sont exécutés.

Dans un exemple, les données ou codes associés au niveau d'isolement i contiennent une ou plusieurs clefs de chiffrement, chiffrées ou non, qui seront utilisées lors de l'exécution d'un ou plusieurs codes associés au niveau d'isolement i+1. Ainsi, un accès pour écriture est par exemple autorisé sur la ou les zones mémoire associées au niveau d'isolement i+1 afin de provisionner les clefs aux codes associés au niveau d'isolement i+1.

Dans un autre exemple, les codes associés au niveau d'isolement i contiennent des instructions visant à vérifier l'intégrité des données et/ou codes associés au niveau d'isolement i+1. Ainsi, un accès en lecture de la ou des zones mémoire associées au niveau d'isolement i+1 est autorisé afin d'effectuer cette vérification.

Dans une étape 607 (i=i+1), postérieure à l'étape 605, la valeur de comptage est incrémentée. Par exemple la valeur de comptage passe de i à i+1. Dans d'autres exemples, l'incrémentation augmente i de plusieurs unités.

Dans une étape 609 (i=N ?) le processeur générique 110 compare la valeur de comptage i à la valeur N, où N est défini comme décrit en relation avec l'étape 507 de la figure 5. Si la valeur i n'est pas égale à N (branche N) le procédé revient à l'étape 605.

Dans le cas où, lors de l'étape de comparaison 609, la valeur de comptage est égale à N (branche Y), le procédé continue sur une étape 613 (EXECUTE CODE ON LEVEL N) dans laquelle le ou les codes de démarrage associés au niveau d'isolation N sont exécutés.

Le démarrage du dispositif de traitement se termine par une étape 615 (END OF BOOT), qui est similaire à l'étape 511 de la figure 5, et n'est pas décrite à nouveau en détail.

Le procédé dont la mise en œuvre est présentée par la figure 6 permet une lecture des codes de démarrage en décalé. En effet les codes de démarrage associés à un niveau d'isolement sont lus lorsque la valeur de comptage est inférieure à la valeur du niveau. Cela permet un gain de temps par rapport à la mise en œuvre du procédé présenté dans la figure 5.

Un avantage des modes de réalisation décrits est que des données sensibles en termes de confidentialité, sont protégées de façon importante par l'usage d'un compteur monotone et en particulier pour verrouiller l'accès lors d'une procédure de débogage.

Un autre avantage des modes de réalisations décrits est qu'ils sont facilement adaptables à plusieurs architectures de démarrage.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, différents types de processeurs peuvent être utilisés. De plus, le nombre de niveaux d'isolement peut varier.

Enfin, la mise en œuvre pratique des modes de réalisation et variantes décrits est à la portée de la personne du métier à partir des indications fonctionnelles données ci-dessus. En particulier, des protocoles d'authentification pour débogage autre qu'un protocole de cryptographie asymétrique peuvent être mis en œuvre.

## Revendications

1. Procédé de débogage d'un dispositif de traitement (102), le procédé comprenant :
- la génération, par un compteur monotone (106) lors d'une première étape d'une séquence de démarrage du dispositif de traitement (102), d'une première valeur de comptage ;
- la transmission, par le compteur monotone, de la première valeur de comptage à un circuit de contrôle d'accès au débogage (116) et à un circuit de contrôle d'accès (108) à une mémoire (104) ;
- la comparaison, par le circuit de contrôle d'accès au débogage et par le circuit de contrôle d'accès à la mémoire, de la première valeur de comptage avec une ou plusieurs valeurs de référence où lesdites valeurs de référence indiquent les valeurs de niveau d'isolement des données stockées dans la mémoire ; et
- l'autorisation ou l'interdiction d'accès pour débogage, par le circuit de contrôle d'accès au débogage, sur la base de la comparaison ;
- l'incrémentation du compteur monotone à une deuxième valeur de comptage, strictement supérieure à la première valeur de comptage ; et
- la transmission, par le compteur monotone lors d'une deuxième étape de la séquence de démarrage, de la deuxième valeur de comptage au circuit de contrôle d'accès au débogage (116) et au circuit de contrôle d'accès (118) à la mémoire,
le circuit de contrôle d'accès (108) à la mémoire (104) étant configuré pour autoriser la lecture de premières données, stockées dans la mémoire (104), sur la base de la comparaison de la première valeur de comptage avec la valeur de référence des premières données, et pour interdire la lecture des premières données sur la base de la comparaison de la deuxième valeur de comptage avec la valeur de référence des premières données.

2. Procédé selon la revendication 1, dans lequel l'autorisation ou l'interdiction d'accès pour débogage comprend l'interdiction d'accès pour débogage sur la base de la première valeur de comptage, le procédé comprenant en outre :
- la comparaison, par le circuit de contrôle d'accès au débogage (116), de la deuxième valeur de comptage avec lesdites une ou plusieurs valeurs de référence ; et
- l'autorisation d'accès pour débogage sur la base de la deuxième valeur de comptage.

3. Procédé selon la revendication 1 ou 2, dans lequel la première valeur de comptage correspond à une valeur d'initialisation du compteur monotone (106) lors d'un premier démarrage du dispositif de traitement (102) et dans lequel la deuxième valeur de comptage correspond à une valeur d'initialisation du compteur monotone (106) lors d'un deuxième démarrage du dispositif de traitement (102).

4. Procédé selon la revendication 3, dans lequel :
- lors du premier démarrage, le dispositif de traitement (102) est initialement placé dans un premier état dans lequel l'accès au débogage par le circuit d'accès au débogage (116) est autorisé sur la base de la première valeur de comptage ; et
- lors du deuxième démarrage, le dispositif de traitement (102) est verrouillé dans un deuxième état dans lequel l'accès au débogage par le circuit d'accès au débogage (116) est interdit sur la base de la première valeur de comptage.

5. Procédé selon la revendication 4, dans lequel les premier et deuxième états du dispositif de traitement (102) sont définis par une ou plusieurs valeurs stockées dans la mémoire (104).

6. Procédé selon l'une quelconque des revendications 1 à 5, dans lequel le circuit de contrôle d'accès (108) à la mémoire (104) est en outre configuré pour autoriser, sur la base de la deuxième valeur de comptage, la lecture de deuxièmes données stockées dans la mémoire.

7. Procédé selon l'une quelconque des revendications 1 à 6, dans lequel le circuit de contrôle d'accès au débogage (116) autorise l'accès pour débogage sur la base d'une valeur de comptage supérieure ou égale à lesdites une ou plusieurs valeurs de référence et interdit l'accès pour débogage sur la base d'une valeur de comptage strictement inférieure à lesdites une ou plusieurs valeurs de référence.

8. Procédé selon l'une quelconque des revendications 1 à 7, comprenant en outre, avant l'autorisation ou l'interdiction d'accès au débogage :
- la réception par le circuit d'accès au débogage (116) d'une requête d'accès au débogage d'un dispositif externe (300) ; et
- la vérification par le circuit d'accès au débogage de l'authentification du dispositif externe (300), dans lequel l'autorisation ou l'interdiction d'accès pour débogage, par le circuit de contrôle d'accès au débogage (116), est également réalisée sur la base de la vérification de l'authentification.

9. Dispositif de traitement de données (102) comprenant :
un compteur monotone (106) configuré pour générer, lors d'une première étape d'une séquence de démarrage du dispositif de traitement (102), une première valeur de comptage ;
un circuit de contrôle d'accès au débogage (116) configuré pour :
- comparer la première valeur de comptage avec une ou plusieurs valeurs de référence où lesdites valeurs de référence indiquent les valeurs de niveau d'isolement des données stockées dans la mémoire ; et
- autoriser ou interdire un accès au débogage sur la base de la comparaison ;
un circuit de contrôle d'accès (108) à une mémoire (104) configuré pour :
- comparer la première valeur de comptage avec la ou les valeurs de référence,
le compteur monotone étant en outre configuré pour être incrémenté à une deuxième valeur de comptage strictement supérieure à la première valeur de comptage et le circuit de contrôle d'accès (108) à la mémoire (104) étant en outre configuré pour autoriser la lecture de premières données, stockées dans la mémoire (104), sur la base de la comparaison de la première valeur de comptage avec la valeur de référence des premières données, et pour interdire la lecture des premières données sur la base de la comparaison de la deuxième valeur de comptage avec la valeur de référence des premières données. à 2

## Patentansprüche

1. Ein Verfahren zum Debuggen eines Verarbeitungsgeräts (102), wobei das Verfahren Folgendes aufweist:
- Generieren, durch einen monotonen Zähler (106), eines ersten Zählwerts in einem ersten Schritt einer Startsequenz des Verarbeitungsgeräts (102);
- Übertragen, durch den monotonen Zähler, des ersten Zählwerts an eine Debug-Zugriffsteuerschaltung (116) und an eine Zugriffsteuerschaltung (108) eines Speichers (104);
- Vergleichen, durch die Debug-Zugriffssteuerungsschaltung und durch die Zugriffssteuerungsschaltung des Speichers, des ersten Zählwerts mit einem oder mehreren Referenzwerten, wobei die Referenzwerte Isolationspegelwerte der Datenwerte angeben, die in dem Speicher gespeichert sind; und
- Autorisieren oder Verhindern eines Debug-Zugriffs, durch die Debug-Zugriffssteuerungsschaltung, basierend auf dem Vergleich
- Inkrementieren des monotonen Zählers nach der Übertragung des ersten Zählwerts auf einen zweiten Zählwert, der streng größer ist als der erste Zählwert; und
- Übertragen, durch den monotonen Zähler in einem zweiten Schritt der Startsequenz, des zweiten Zählwerts an die Debug-Zugriffssteuerungsschaltung (116) und an die Zugriffssteuerungsschaltung (118) des Speichers,
wobei die Zugriffssteuerschaltung (108) des Speichers (104) konfiguriert ist zum Autorisieren des Lesens von ersten Datenwerten, die im Speicher (104) gespeichert sind, basierend auf dem Vergleich des ersten Zählwerts mit dem Referenzwert, und zum Verhindern des Lesens der ersten Datenwerte, wenn der zweite Zählwert kleiner ist als der erste Zählwert.

2. Das Verfahren nach Anspruch 1, wobei das Autorisieren oder Verhindern des Zugriffs zum Debuggen Verhindern des Zugriffs zum Debuggen auf der Grundlage des ersten Zählwerts aufweist, wobei das Verfahren ferner Folgendes aufweist:
- Vergleichen durch die Debug-Zugriffssteuerschaltung (116) des zweiten Zählwerts mit dem einen oder den mehreren Referenzwerten; und
- Autorisieren des Debug-Zugriffs auf der Grundlage des zweiten Zählwerts.

3. Das Verfahren gemäß Anspruch 1 oder 2, wobei der erste Zählwert einem Initialisierungswert des monotonen Zählers (106) beim ersten Start des Verarbeitungsgeräts (102) entspricht und wobei der zweite Zählwert einem Initialisierungswert des monotonen Zählers (106) beim zweiten Start des Verarbeitungsgeräts (102) entspricht.

4. Das Verfahren nach Anspruch 3, wobei:
- während des ersten Startvorgangs das Verarbeitungsgerät (102) zunächst in einen ersten Zustand versetzt wird, wobei der Debug-Zugriff durch die Debug-Zugriffsschaltung (116) auf der Grundlage des ersten Zählwerts autorisiert wird; und
- während des zweiten Startvorgangs das Verarbeitungsgerät (102) in einem zweiten Zustand gesperrt wird, wobei der Debug-Zugriff durch die Debug-Zugriffsschaltung (116) auf der Grundlage des ersten Zählwerts verhindert wird.

5. Das Verfahren nach Anspruch 4, wobei der erste und der zweite Zustand des Verarbeitungsgeräts (102) durch einen oder mehrere Werte definiert sind, die im Speicher (104) gespeichert sind.

6. Das Verfahren nach einem der Ansprüche 1 bis 5, wobei die Zugriffssteuerschaltung (108) für den Speicher (104) ferner konfiguriert ist zum Autorisieren, basierend auf dem zweiten Zählwert, des Lesens von zweiten Datenwerten, die in dem Speicher gespeichert sind.

7. Das Verfahren nach einem der Ansprüche 1 bis 6, wobei die Debug-Zugriffssteuerschaltung (116) den Debug-Zugriff auf der Grundlage eines Zählwerts autorisiert, der größer oder gleich dem einen oder den mehreren Referenzwerten ist, und den Debug-Zugriff auf der Grundlage eines Zählwerts verhindert, der streng kleiner als der eine oder die mehreren Referenzwerte ist.

8. Das Verfahren nach einem der Ansprüche 1 bis 7, ferner aufweisend, vor dem Autorisieren oder Verhindern des Debugging-Zugriffs:
- Empfangen durch die Debug-Zugriffsschaltung (116) einer Debug-Zugriffsanforderung von einer externen Vorrichtung (300); und
- Überprüfen durch die Debug-Zugriffsschaltung der Authentifizierung der externen Vorrichtung (300), wobei das Autorisieren oder Verhindern des Debug-Zugriffs durch die Debug-Zugriffssteuerschaltung (116) ebenfalls auf der Grundlage der Authentifizierungsüberprüfung durchgeführt wird.

9. Ein Datenverarbeitungsgerät (102), das Folgendes aufweist:
einen monotonen Zähler (106), der konfiguriert ist zum Generieren, in einem ersten Schritt einer Startsequenz des Verarbeitungsgeräts (102), eines ersten Zählwerts;
eine Debug-Zugriffssteuerschaltung (116), die konfiguriert ist zum:
- Vergleichen des ersten Zählwerts mit einem oder mehreren Referenzwerten, wobei die Referenzwerte Isolationspegelwerte von Datenwerten angeben, die in dem Speicher gespeichert sind; und
- Autorisieren oder Verhindern des Debug-Zugriffs basierend auf dem Vergleich;
eine Zugriffssteuerschaltung (108) für einen Speicher (104), die konfiguriert ist zum:
- Vergleichen des ersten Zählwerts mit dem einen oder den mehreren Referenzwerten,
wobei der monotone Zähler ferner konfiguriert ist, um auf einen zweiten Zählwert erhöht zu werden, der streng größer ist als der erste Zählwert, und wobei die Zugriffssteuerschaltung (108) für den Speicher (104) ferner konfiguriert ist zum Autorisieren des Lesens erster Datenwerte, die in dem Speicher (104) gespeichert sind, basierend auf dem Vergleich des ersten Zählwerts mit dem Referenzwert der ersten Datenwerte, und zum Verhindern des Lesens der ersten Datenwerte basierend auf dem Vergleich des zweiten Zählwerts mit dem Referenzwert der ersten Datenwerte.

## Claims

1. A method for debugging a processing device (102), the method comprising:
- generating, by a monotonic counter (106), a first count value, in a first step of a boot sequence of the processing device (102);
- transmitting, by the monotonic counter, the first count value to a debug access control circuit (116) and to an access control circuit (108) of a memory (104);
- comparing, by the debug access control circuit and by the access control circuit of the memory, the first count value with one or more reference values where the said reference values indicate isolation level values of the data values stored in the memory; and
- authorizing or preventing debug access, by the debug access control circuit, based on the comparison
- incrementing the monotonic counter to a second count value after transmission of the first count value, strictly higher than the first count value; and
- transmitting, by the monotonic counter in a second step of the boot sequence, the second count value to the debug access control circuit (116) and to the access control circuit (118) of the memory,
the access control circuit (108) of the memory (104) being configured to authorize the reading of first data values, stored in the memory (104), based on the comparison of the first count value with the reference value of the first data values, and to forbid the reading of the first data values based on the comparison of the second count value with the reference value of the first data values.

2. The method according to claim 1, wherein the authorization or forbidding for the access for debugging comprises forbidding access for debugging based on the first count value, the method further comprising:
- comparing, by the debug access control circuit (116), the second count value with the said one or more reference values; and
- authorizing the debug access based on the second count value.

3. The method according to claim 1 or 2, wherein the first count value corresponds to an initialization value of the monotonic counter (106) upon a first boot of the processing device (102) and wherein the second count value corresponds to an initialization value of the monotonic counter (106) upon a second boot of the processing device (102).

4. The method according to claim 3, wherein:
- during the first boot, the processing device (102) is initially placed in a first state wherein the debug access by the debug access circuit (116) is authorized based on the first count value; and
- during the second boot, the processing device (102) is locked in a second state wherein the debug access by the debug access circuit (116) is prevented based on the first count value.

5. The method according to claim 4, wherein the first and second states of the processing device (102) are defined by one or more values stored in the memory (104).

6. The method according to any one of claims 1 to 5, wherein the access control circuit (108) to the memory (104) is further configured to authorize, based on the second count value, the reading of second data values stored in the memory.

7. The method according to any one of claims 1 to 6, wherein the debug access control circuit (116) authorizes the debug access based on a count value greater than or equal to the said one or more reference values and prevents debug access based on a count value strictly less than the said one or more reference values.

8. The method according to any one of claims 1 to 7, further comprising, prior to authorizing or preventing debugging access:
- receiving by the debug access circuit (116) a debug access request from an external device (300); and
- the debug access circuit verifying authentication of the external device (300), wherein authorization or prevention of the debug access by the debug access control circuit (116) is also performed based on the authentication verification.

9. A data processing device (102) comprising:
a monotonic counter (106) configured to generate, in a first step of a boot sequence of the processing device (102), a first count value;
a debug access control circuit (116) configured to:
- compare the first count value with one or more reference values, where the said reference values indicate isolation level values of the data values stored in the memory; and
- authorize or forbid debug access based on the comparison;
an access control circuit (108) to a memory (104) configured to:
- compare the first count value with the one or more reference values,
the monotonic counter being further configured to be incremented to a second count value strictly higher than the first count value and the access control value (108) to the memory (104) being further configured to authorize the reading of first data values, stored in the memory (104), based on the comparison of the first count value with the reference value of the first data values, and to forbid the reading of the first data values based on the comparison of the second count value with the reference value of the first data values.
